# EUROPÄISCHE PATENTSCHRIFT

(11) **EP 1 509 114 B1**
(45) Veröffentlichungstag und Bekanntmachung des Hinweises auf die Patenterteilung: **08.02.2006**
(21) Anmeldenummer: 03722389.8
(22) Anmeldetag: 03.04.2003
(51) Int. Cl.: A47J 42/56

(54) **ELEKTROMOTORISCH BETRIEBENES KÜCHENGERÄT**
ELECTRIC MOTOR OPERATED KITCHEN DEVICE
APPAREIL DE CUISINE A MOTEUR ELECTRIQUE

(30) Priorität: 21.05.2002 DE 10222376
(43) Veröffentlichungstag der Anmeldung: 02.03.2005
(60) Teilanmeldung: 05105902.0
(73) Patentinhaber: Vorwerk & Co. Interholding GmbH, 42275 Wuppertal (DE)
(72) Erfinder: CALDEWEY, Uwe, 44229 Dortmund (DE)
(74) Vertreter: Müller, Enno
(86) Internationale Anmeldenummer: PCT/EP2003/003457
(87) Internationale Veröffentlichungsnummer: WO 2003/096858

(56) Entgegenhaltungen:
- EP-A- 0 417 800
- DE-A- 3 720 928
- DE-A- 10 035 540

## Beschreibung

Die Erfindung betrifft ein elektromotorisch betriebenes Küchengerät nach den Merkmalen des Oberbegriffes des Anspruches 1.

Ein solches Küchengerät ist beispielsweise aus der DE 100 35 540 A bekannt. Zum Stand der Technik ist auch auf die EP-A-0 417 800 hinzuweisen.

Im Hinblick auf den zunächst genannten Stand der Technik wird eine Aufgabe der Erfindung darin gesehen, ein Küchengerät der genannten Art derart zu verbessern, dass eine erhöhte Sicherheit für den Benutzer gegeben ist.

Diese Aufgabe ist beim Gegenstand des Anspruches 1 gelöst, wobei darauf abgestellt ist, dass in dem Küchengerät ein

Fehlerstromsensor angeordnet ist, der bei Erfassung eines Fehlerstroms die Stromversorgung jedenfalls des Elektromotors unterbricht. Zufolge dieser erfindungsgemäßen Ausgestaltung wird auch bei Küchengeräten, welche in der Regel als mobile Haushaltsgeräte ausgebildet sind, im Falle eines Fehlerstroms eine Strombelastung des Benutzers verhindert. Wird ein Fehlerstrom in dem Gerät erfasst, so unterbricht der Fehlerstromsensor die Stromversorgung insbesondere der unter Netzspannung stehenden Geräteaggregate. So wird insbesondere der Elektromotor zum Antrieb des Rührwerks durch Unterbrechung der Stromversorgung abgeschaltet. Darüber hinaus kann durch den Fehlerstromsensor auch die gesamte Stromversorgung des Küchengerätes unterbrochen werden, so dass auch die gesamte auf Niedervoltniveau arbeitende Elektronik abgeschaltet wird. Diesbezüglich ist weiter vorgesehen, dass bei einem Küchengerät, welches ein, zu einem Netzstecker führendes Elektrokabel aufweist, der Fehlerstromsensor innerhalb des Küchengeräts und umgebend zu dem Elektrokabel angeordnet ist.

Es ist auch vorgesehen dass die Stromversorgung des Reluktanzmotors über ein Relais gesteuert ist Schaltet nun der Benutzer das Gerät ab, so ist über das Relais die Stromversorgung des, das Rührwerk antreibenden Reluktanzmotors bis zum Stillstand desselben gewährleistet. Das Relais unterbricht erst dann die Stromversorgung, wenn der Motor zum Stillstand gekommen ist. Des weiteren können über das Relais auch weitere Sicherungsmaßnahmen gesteuert werden. Es ist denkbar, dass erst nach einem Öffnen des Relais und demnach erst nach einem Stillstand des Rührwerks das Abheben eines Rührgefäßdeckels ermöglicht ist. Als besonders vorteilhaft erweist sich eine Weiterbildung, bei welcher der Reluktanzmotor nach einer vom Benutzer verfügten Abschaltung unter weiterer Stromversorgung über das Relais elektrisch gebremst wird. Als besonders vorteilhaft erweist sich eine Ausgestaltung, bei welcher das Relais von einem Mikroprozessor gesteuert wird, welcher die Stromzufuhr unterbricht, wenn der Reluktanzmotor zum Stillstand gekommen ist. Dieser Mikroprozessor übernimmt darüber hinaus auch die Motorsteuerung, wobei bei einer verfügten Abschaltung durch den Benutzer der Mikrokontroller den Reluktanzmotor in den Generatorbetrieb schaltet und zugleich überwacht. Bei Stillstand des Elektromotors und somit auch bei Stillstand des Rührwerks wird über den Mikrokontroller das Relais in eine, die Stromzufuhr unterbrechende Stellung geschaltet. Als besonders vorteilhaft erweist sich die erfindungsgemäße Lösung bei einer Konfiguration, bei welcher das Relais anstelle eines Hauptschalters vorgesehen ist. Es wird demnach kein manuell betätigbarer, die Stromzuführung direkt unterbrechender Schalter eingesetzt. Vielmehr ist ein durch den Benutzer zu betätigender Schalter vorgesehen, welcher über den Mikrokontroller auf das erst bei Stillstand des Elektromotors öffnende Relais einwirkt. Ein Öffnen des Relais kann zum kompletten Abschalten des Geräts führen. Bevorzugt wird jedoch eine Ausgestaltung, bei welcher die Geräteelektronik im Übrigen unabhängig von einer Stromversorgung des Reluktanzmotors von einem in dem Gerät angeordneten Transformator bei Verbindung des Geräts zur Netzspannung versorgt ist, so dass bei einer verfügten Abschaltung des Motors durch den Benutzer die übrige Geräteelektronik, wie bspw. eine Wägeeinrichtung und/ oder eine Heizeinrichtung weiterhin betriebsbereit sind. Bevorzugt wird diesbezüglich die Anordnung eines Stand-by-Netzteiles. Demnach ist der den Elektromotor steuernde Mikrokontroller in ständiger Betriebsbereitschaft. In einer Weiterbildung des Erfindungsgegenstandes ist in dem Gerät ein Fehlerstromsensor angeordnet, der bei Erfassung eines Fehlerstroms die Stromversorgung jedenfalls des Elektromotors unterbricht. Auch wird diesbezüglich vorgeschlagen, dass der Fehlerstromsensor innerhalb des Küchengeräts und umgebend zu dem Elektrokabel angeordnet ist. Schließlich erweist sich weiter von Vorteil, dass der Fehlerstromsensor mit dem Relais und/ oder mit dem Mikroprozessor zusammengeschaltet ist, so dass im Falle eines erfassten Fehlerstroms ein sicherheitsrelevantes Abschalten durch das Ansprechen des Fehlerstromsensors oder DI-Sensors erfolgt.

Nachstehend ist die Erfindung anhand der beigefügten Zeichnung, welche lediglich ein Ausführungsbeispiel darstellt, näher erläutert. Hierbei zeigt:
- Fig. 1: eine Ansicht gegen ein erfindungsgemäßes Küchengerät mit einem Rührgefäß und einem Elektromotor für ein Rührwerk in dem Rührgefäß;
- Fig. 2: eine Prinzipdarstellung der Stromzufuhr-Steuerung des Elektromotors.

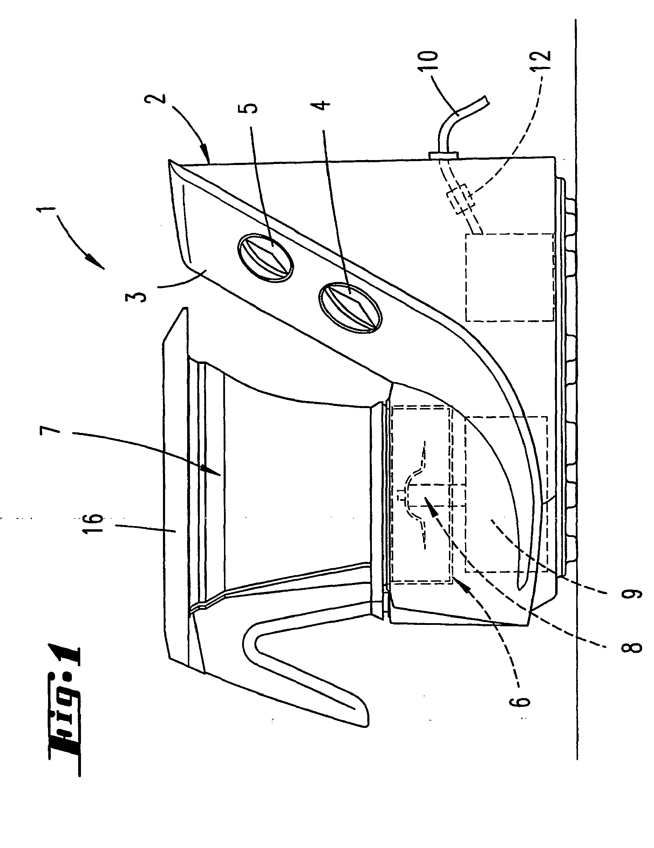

Dargestellt und beschrieben ist zunächst mit Bezug zu Fig.1 eine Küchenmaschine 1 mit einem Gehäuse 2, welch letzteres ein Bedienfeld 3 aufweist. Dieses Bedienfeld 3 trägt einen Temperaturwähler 4 sowie einen Drehzahlsteller 5.

Des weiteren weist das Gehäuse 2 einen, einen Aufsetzadapter 6 ausbildenden Aufnahmebereich für ein Rührgefäß 7 auf. Letzteres ist beheizbar.

In dem Küchengefäß 7 ist ein Rührwerk 8 vorgesehen, welches über eine nicht näher dargestellte Kupplung bei in dem Aufsetzadapter 6 eingesetztem Küchengefäß 7 mit einem, über den Drehzahlsteller 5 regelbaren Elektromotor 9 in Verbindung steht. Bevorzugt ist hierbei der Elektromotor ein Reluktanzmotor.

Die Stromversorgung des Küchengerätes 1 erfolgt über ein, mit einem nicht dargestellten Netzstecker versehenes Elektrokabel 10.

An dem Elektrokabel 10 ist gehäuseinnenseitig ein Transformator 11 in Form eines Stand-by-Netzteiles angeschlossen.

Das zu dem Transformator 11 führende Elektrokabel 10 ist innerhalb des Gehäuses 2 von einem Fehlerstromsensor 12 umgeben. Letzterer unterbricht bei Erfassung eines Fehlerstroms die Stromversorgung jedenfalls des Elektromotors 9.

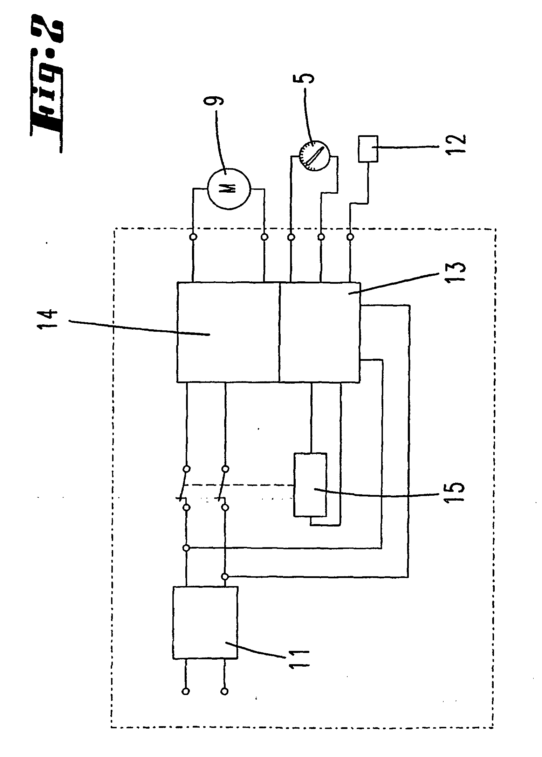

Wie aus der Schemadarstellung in Fig. 2 zu erkennen, übernimmt ein Mikrokontroller 13 abhängig von der Einstellung des Drehzahlstellers 5 die Steuerung des Elektromotors 9. Hierzu ist ein vom Mikrokontroller 13 abhängiges Steuerungsmodul 14 vorgesehen.

Das Ein- und Ausschalten des Geräts insbesondere des Elektromotors 9 wird über ein mittels des Mikrokontrollers 13 gesteuertes Relais 15 vorgenommen. Letzteres ist ein zweipoliges Relais, durch welches das Gerät, insbesondere der Elektromotor 9 galvanisch vom Netz getrennt werden kann. Wird durch den Benutzer eine Abschaltung verfügt, bspw. durch Stellen des Drehzahlstellers 5 in eine Null-Position, so übernimmt der diesen Abschaltbefehl verarbeitende Mikrokontroller 13 die Motorsteuerung. Zum schnellen Abbremsen des Elektromotors 9 wird dieser unter weiterer Stromversorgung über das Relais 15 elektrisch gebremst.

Der Stillstand des Elektromotors 9 wird vom Mikroprozessor 13 erfasst, welcher hiernach das Relais 15 in eine, die Stromzufuhr zu dem Elektromotor 9 unterbrechende Stellung steuert.

Das Relais kann hierbei so angeordnet sein, dass ein Öffnen desselben nur zu einer Stromunterbrechung des Elektromotors 9 führt. Dies bedeutet, dass die weitere Geräteelektronik, wie bspw. die Heizung und/oder die Wägeeinrichtung des Küchengerätes 1 unabhängig von der Stromversorgung des Elektromotors 9 weiter von dem in dem Gerät 1 angeordneten Transformator 11 bei Verbindung des Gerätes 1 zur Netzspannung versorgt sind. Denkbar ist jedoch auch eine Lösung, bei welcher das Relais 15 durch den Mikrokontroller 13 gesteuert die gesamte Stromversorgung des Küchengerätes 1 mit Ausnahme die des Mikrokontrollers 13 unterbricht, so dass das Relais 15 einen Hauptschalter für das Küchengerät 1 bildet. Für diese Funktion könnte des weiteren im Bereich des Bedienfeldes 3 des Küchengerätes 1 ein Schalter oder Taster zur Abschaltung in einen Stand-by-Modus des Gerätes 1 vorgesehen sein.

Darüber hinaus kann auch ein sicherheitsrelevantes Abschalten durch das Ansprechen des Fehlerstromsensors 12 erfolgen, dessen Signal gleichfalls von dem Mikrokontroller 13 erfasst und ausgewertet wird.

In vorteilhafter Weise ist durch die erfindungsgemäße Ausgestaltung erreicht, dass das Gerät 1 erst nach einem Stillstand des Elektromotors 9, bzw. des durch diesen angetriebenen Rührwerks 8 abgeschaltet wird. Dies hat des weiteren noch in Verbindung mit einem erst bei Motorstillstand abnehmbaren Gefäßdeckel 16 den Vorteil, dass auch bei einem durch Fehlerstrom verursachten Abschalten des Gerätes 1 der Deckel nicht frühzeitig entfernt werden kann, so dass die Gefahr des Eingreifens in das noch rotierende Rührwerk 8 bei frühzeitig abgehobenem Deckel 16 nicht besteht.

## Patentansprüche

1. Elektromotorisch betriebenes Küchengerät (1), insbesondere eine Küchenmaschine, mit einem Rührgefäß (7), wobei der Elektromotor (9) bevorzugt ein Reluktanzmotor ist, **dadurch gekennzeichnet, dass** in dem Küchengerät (1) ein Fehlerstromsensor (12) angeordnet ist, der bei Erfassung eines Fehlerstroms die Stromversorgung jedenfalls des Elektromotors (9) unterbricht.

2. Küchengerät nach Anspruch 1, wobei das Küchengerät (1) ein, zu einem Netzstecker führendes Elektrokabel (10) aufweist, **dadurch gekennzeichnet, dass** der Fehlerastromsensor (12) innerhalb des Küchengerätes (1) und umgebend zu dem Elektrokabel (10) angeordnet ist.

3. Küchengerät nach Anspruch 1 oder 2, wobei der Elektromotor ein Reluktanzmotor ist, **dadurch gekennzeichnet, dass** die Stromversorgung des Reluktanzmotors (9) über ein Relais (15) gesteuert ist und dass der Reluktanzmotor (9) nach einer vom Benutzer verfügten Abschaltung unter weiterer Stromversorgung über das Relais (15) elektrisch gebremst wird.

4. Küchengerät nach Anspruch 3, **dadurch gekennzeichnet, dass** das Relais (15) von einem Mikroprozessor (13) gesteuert wird, welcher die Stromzufuhr unterbricht, wenn der Reluktanzmotor (9) zum Stillstand gekommen ist.

5. Küchengerät nach den Ansprüchen 3 bis 4, **dadurch gekennzeichnet, dass** das Relais (15) anstelle eines Hauptschalters vorgesehen ist.

6. Küchengerät nach einem der Ansprüche 3 bis 5, **dadurch gekennzeichnet, dass** die Geräteelektronik im Übrigen unabhängig von einer Stromversorgung des Reluktanzmotors (9) von einem in dem Gerät (1) angeordneten Transformator (11) bei Verbindung des Gerätes (1) zur Netzspannung versorgt ist.

7. Küchengerät nach einem der Ansprüche 3 bis 6, **dadurch gekennzeichnet, dass** in dem Gerät (1) ein Fehlerstromsensor (12) angeordnet ist.

8. Küchengerät nach Anspruch 7, wobei das Küchengerät (1) ein, zu einem Netzstecker führendes Elektrokabel (10) aufweist, **dadurch gekennzeichnet, dass** der Fehlerstromsensor (12) innerhalb des Küchengerätes (1) und umgebend zu dem Elektrokabel (10) angeordnet ist.

9. Küchengerät nach den Ansprüchen 7 oder 8, **dadurch gekennzeichnet, dass** der Fehlerstromsensor (12) mit dem Relais (15) und/oder mit dem Mikroprozessor (13) zusammengeschaltet ist.

## Claims

1. Electric motor operated kitchen device (1), especially a food processor, with a mixing vessel (7), the electric motor (9) preferably being a reluctance motor, **characterized in that** a residual current sensor (12) is disposed in the kitchen device (1) and interrupts the current supply at least of the electric motor (9) if a residual current is detected.

2. Kitchen device according to Claim 1, the kitchen device (1) having an electric cable (10) leading to a power plug, **characterized in that** the residual current sensor (12) is disposed inside the kitchen device (1) and surrounding the electric cable (10).

3. Kitchen device according to Claim 1 or 2, the electric motor (9) being a reluctance motor, **characterized in that** the current supply of the reluctance motor (9) is controlled by means of a relay (15) and **in that** the reluctance motor (9) is electrically braked after switching off is effected by the user, with current continuing to be supplied via the relay (15).

4. Kitchen device according to Claim 3, **characterized in that** the relay (15) is controlled by a microprocessor (13) which interrupts the current supply when the reluctance motor (9) has come to a standstill.

5. Kitchen device according to Claims 3 and 4, **characterized in that** the relay (15) is provided instead of a main switch.

6. Kitchen device according to Claims 3 to 5, **characterized in that**, when the device (1) is connected to the line voltage, the electronics of the device are supplied otherwise independently of a current supply of the reluctance motor (9) by a transformer (11) disposed in the device (1).

7. Kitchen device according to Claims 3 to 6, **characterized in that** a residual current sensor (12) is disposed in the device (1).

8. Kitchen device according to Claim 7, the kitchen device (1) having an electric cable (10) leading to a power plug, **characterized in that** the residual current sensor (12) is disposed inside the kitchen device (1) and surrounding the electric cable (10).

9. Kitchen device according to Claim 7 or 8, **characterized in that** the residual current sensor (12) is interconnected with the relay (15) and/or with the microprocessor (13).

## Revendications

1. Appareil de cuisine (1) à moteur électrique, en particulier un robot ménager, comprenant un récipient malaxeur (7), le moteur électrique (9) étant de préférence un moteur à reluctance, **caractérisé en ce que** dans l'appareil de cuisine (1) est disposé un capteur de courant de défaut (12), qui interrompt l'alimentation électrique dans tous les cas du moteur électrique (9) en cas de détection d'un courant de défaut.

2. Appareil de cuisine selon la revendication 1, l'appareil de cuisine (1) présentant un câble électrique (10) aboutissant à une fiche de secteur, **caractérisé en ce que** le capteur de courant de défaut (12) est disposé à l'intérieur de l'appareil de cuisine (1) et de façon enveloppante par rapport au câble électrique (10).

3. Appareil de cuisine selon la revendication 1 ou 2, le moteur électrique étant un moteur à reluctance, **caractérisé en ce que** l'alimentation électrique du moteur à reluctance (9) est commandée par un relais (15) et **en ce que** le moteur à reluctance (9) est freiné électriquement par le relais (15) après une déconnexion effectuée par l'utilisateur avec une nouvelle alimentation électrique.

4. Appareil de cuisine selon la revendication 3, **caractérisé en ce que** le relais (15) est commandé par un microprocesseur (13), qui interrompt l'alimentation électrique lorsque le moteur à reluctance (9) s'est arrêté.

5. Appareil de cuisine selon es revendications 3 à 4, **caractérisé en ce que** le relais (15) est prévu à la place d'un interrupteur principal.

6. Appareil de cuisine selon l'une quelconque des revendications 3 à 5, **caractérisé en ce que** l'électronique d'appareil est alimenté par ailleurs indépendamment d'une alimentation électrique du moteur à reluctance (9) par un transformateur (11) disposé dans l'appareil (1) en cas de liaison de l'appareil (1) avec la tension du réseau.

7. Appareil de cuisine selon l'une quelconque des revendications 3 à 6, **caractérisé en ce qu'**un capteur de courant de défaut (12) est disposé dans l'appareil (1).

8. Appareil de cuisine selon la revendication 7, l'appareil de cuisine (1) présentant un câble électrique (10) aboutissant à une fiche de secteur, **caractérisé en ce que** le capteur de courant de défaut (12) est disposé à l'intérieur de l'appareil de cuisine (1) et de façon enveloppante par rapport au câble électrique (10).

9. Appareil de cuisine selon les revendications 7 ou 8, **caractérisé en ce que** le capteur de courant de défaut (12) est interconnecté avec le relais (15) et/ou avec le microprocesseur (13).
